# EUROPEAN PATENT APPLICATION

(11) **EP 3 502 594 A1**
(43) Date of publication of application: **26.06.2019**
(21) Application number: 17208687.8
(22) Date of filing: 19.12.2017
(51) Int. Cl.: F25D 13/06, F25D 3/11

(54) **APPARATUS AND METHOD FOR COOLING PRODUCTS**

(71) Applicant: Air Liquide Deutschland GmbH, 40235 Düsseldorf (DE); L'Air Liquide Société Anonyme pour l'Etude et l'Exploitation des Procédés Georges Claude, 75007 Paris (FR)
(72) Inventor: Voss, Robert, 47829 Krefeld (DE); Angenheister de Freitas, Alexander, 41460 Neuss (DE)
(74) Representative: KNH Patentanwälte Neumann Heine Taruttis PartG mbB

(57) **Abstract**

Apparatus (1) for cooling products (2) comprising at least:
- a cooling chamber (3) with a conveyor (4) for conveying the products (2) through the cooling chamber (3),
- at least one circulator (5) for circulating a cooling gas within at least a part of the cooling chamber (3),
- guiding elements (6) for guiding a flow of the cooling gas,
wherein the guiding elements (6) are arranged within the cooling chamber (3) such that an impingement section (7) is formed adjacent to a first side (8) of the conveyor (4), in which the cooling gas can impinge the first side (8) of the conveyor (4) having a first pressure, wherein the conveyor (4) is designed such that the cooling gas can penetrate through the conveyor (4) so as to have a second pressure at a second side (9) of the conveyor (4) opposite the first side (8), wherein the second pressure is lower than the first pressure, and wherein the guiding elements (6) are arranged such as to form at least one backflow channel (10) from the second side (9) of the conveyor (4) to the at least one circulator (5), and wherein the cooling gas can be directed into the impingement section (7) via the at least one circulator (5).

With the apparatus 1 products 2 such as food products can be cooled using a cooling gas such a gas comprising nitrogen. With guiding elements 6 a flow of the cooling gas can be guided. Thereby, the products 2 can be cooled particularly energy efficiently.

## Description

The present invention is directed to an apparatus and a method for cooling products, in particular food products.

Cooling apparatuses and cooling methods are known for various goods, in particular for food products. Thereby, the goods are usually treated by a cooling gas such as nitrogen. The temperature of the goods can be reduced due to the low temperature the cooling gas usually has. This way, in particular perishable food products can be frozen for storage and/or delivery to final customers.

The energy efficiency that can be achieved with known apparatuses and methods for cooling products are insufficiently low for some applications.

It is, therefore, an object of the present invention to overcome at least in part the disadvantages known from prior art and in particular to provide an apparatus and a method for cooling products in a particularly energy efficient way.

These objects are solved by the features of the independent claims. Dependent claims are directed to preferred embodiments of the present invention.

According to the present invention an apparatus for cooling products is provided that comprises at least:
- a cooling chamber with a conveyor for conveying the products through the cooling chamber,
- at least one circulator for circulating a cooling gas within at least a part of the cooling chamber,
- guiding elements for guiding a flow of the cooling gas,
wherein the guiding elements are arranged within the cooling chamber such that an impingement section is formed adjacent to a first side of the conveyor, in which the cooling gas can impinge the first side of the conveyor having a first pressure, wherein the conveyor is designed such that the cooling gas can penetrate through the conveyor so as to have a second pressure at a second side f the conveyor opposite the first side, wherein the second pressure is lower than the first pressure, and wherein the guiding elements are arranged such as to form at least one backflow channel from the second side of the conveyor to the at least one circulator, and wherein the cooling gas can be directed into the impingement section via the at least one circulator.

The first side of the conveyor is opposite the second side of the conveyor. The conveyor and the whole apparatus are preferably designed to convey the products to be cooled through the cooling chamber on the first side of the conveyor. The described apparatus is preferably designed to cool food products such as meat patties or hot breaded food products like Schnitzel. In particular, the products can be frozen by the described cooling apparatus. Thereby, food products can be prepared for storage and/or delivery to final customers. However, not only food products but also any other goods can be cooled with the described apparatus.

The products can be cooled within the cooling chamber. The cooling chamber is preferably a space that is thermally isolated form the environment. The cooling chamber is preferably confined by respective boundaries such as housing walls and preferably doors, locks and/or barriers through which the conveyor enters and leaves the cooling chamber.

The products can be conveyed through the cooling chamber by the conveyor. The conveyor comprises preferably a conveyor belt, onto which the products can be placed. The conveyor belt can be held and moved by two or more rolls. That is, the conveyor can have a first run and a second run, which can be moved concurrently. Thereby, the products can be placed in particular on the first run. The products can be placed onto the conveyor outside or inside the cooling chamber. Also, the products can be taken from the conveyor outside or inside the cooling chamber. Air locks can be provided, via which the products can be moved into and out of the cooling chamber with a reduced loss of cool atmosphere from inside the cooling chamber to the surroundings. The cooling chamber is preferably designed as a tunnel through which the conveyor can convey the products. The apparatus hence can also be referred to as a cooling tunnel.

Inside the cooling chamber the products can be cooled. Therefore, the cooling gas is preferably introduced into the cooling chamber. The cooling gas is preferably a gas such as nitrogen or carbon dioxide. The cooling chamber comprises preferably at least one cooling gas inlet, through which the cooling gas or at least a gas such as nitrogen or carbon dioxide can be introduced into the cooling chamber. Nitrogen or carbon dioxide can be provided to the cooling gas inlet, for example, from a storage tank and/or from a network for supplying the cooling gas. Nitrogen or carbon dioxide thereby can be provided in the gaseous and/or in the liquid state. If the gas is provided at least in part in its liquid state, the gas can evaporate within the cooling chamber. The cooling gas is preferably provided at a low temperature such as -150 °C to -40°C such that the products can be cooled by the cooling gas.

Preferably the cooling gas is introduced into the cooling chamber in such a way that the cooling gas impinges the products. This can be achieved in particular by a respective design and arrangement of the cooling gas inlet. Further, the cooling gas that is already within the cooling chamber is preferably circulated through the cooling chamber. Thereby, the cooling gas can impinge products more than once. This can increase energy efficiency. The cooling gas can be circulated by the at least one circulator. The at least one circulator preferably comprises a fan. With the at least one circulator a flow of the cooling gas can be generated within the cooling chamber. With the at least one circulator the cooling gas can be preferably circulated at least within that part of the cooling chamber in which the conveyor is located.

The apparatus according to the present invention allows to cool products highly energy efficiently, in particular due to the guiding elements.
The guiding elements are preferably designed in such a way that the cooling gas cannot penetrate through the guiding elements. Alternatively, the guiding elements are preferably designed such that only a small fraction of the cooling gas that impinges a guiding element can penetrate through the guiding element. Thus, the flow of the cooling gas can be guided by the guiding elements.

The impingement section is a part of the cooling chamber that is confined at least in part by the guiding elements. Further, the impingement section is preferably partly confined by the first side of the conveyor. The impingement section thus is that part of the cooling chamber, via which the cooling gas can impinge the products. The pressure of the cooling gas within the impingement section and in particular adjacent to the first side of the conveyor, that is the first pressure, can influence the cooling of the products. The impingement section is not necessarily confined to all sides.

After having impinged the first side of the conveyor, the cooling gas can penetrate through the conveyor to the second side of the conveyor. In case the conveyor comprises a first run and a second run, the first side of the conveyor is a first side of the first run and the second side of the conveyor is a second side of the first run. That is, the second side of the conveyor faces a space between the first run and the second run. The cooling gas can penetrate from the first side of the conveyor through the first run of the conveyor to the second side and thus enter the space between the first and second runs.

The fact that the second pressure is lower than the first pressure means in particular that the conveyor constitutes a flow resistance. That is, by penetrating the conveyor the flow of the cooling gas is slowed down.

Once the cooling gas has penetrated the conveyor the cooling gas is guided to the at least one backflow channel. Through the at least one backflow channel the cooling gas can flow back to the at least one circulator. With the at least one circulator the cooling gas can be introduced into the impingement section and can impinge the conveyor again. Thus, a circular flow path for the cooling gas is provided.

The at least one backflow channel is preferably situated outside the impingement section. At least a part of the guiding elements preferably separates the impingement section from the at least one backflow channel.

In a preferred embodiment of the apparatus the conveyor comprises a plurality of perforation openings.

The perforation openings are preferably openings within the conveyor (belt) extending through the conveyor (belt). Through the perforation openings the cooling gas can penetrate through the conveyor from the first side of the conveyor to the second side of the conveyor. The smaller the density of the perforation openings is (that is the fewer perforation openings are provided and/or the smaller the perforation openings are per area of the conveyor), the smaller is the second pressure compared to the first pressure.

In a further preferred embodiment of the apparatus the conveyor is designed such that a pressure gradient between the first side of the conveyor and the second side of the conveyor is generated when the first side of the conveyor is impinged with the cooling gas.

If the cooling gas impinges the first side of the conveyor the flow of the cooling gas is slowed down by the conveyor. Thus, the pressure of the cooling gas at the second side of the conveyor is lower than on the first side of the conveyor. Between the first side of the conveyor and the second side of the conveyor a pressure gradient is generated.

In a further preferred embodiment of the apparatus the first pressure is between 10 Pa (Pascal) and 300 Pa larger than the second pressure.

In a further preferred embodiment the apparatus is designed such that the products can be received at the first side of the conveyor.

This means that preferably the products are in use conveyed on the first side of the conveyor. If the products are placed onto the first side of the conveyor, the products can be impinged by the cooling gas as the first side of the conveyor is impinged with the cooling gas. Preferably, the conveyor is oriented in such a way that the first side is an upper side. The cooling gas then can impinge the first side of the conveyor from a top of the cooling chamber (from above), thereby pressing the products down onto the conveyor.

In a further preferred embodiment of the apparatus the guiding elements are arranged such that the cooling gas can flow concurrently through the impingement section and the at least one backflow channel.

Preferably, the cooling gas can be introduced into a top of the impingement section via the at least one circulator, can flow down to the first side of the conveyor, can penetrate through the conveyor to the second side of the conveyor and can flow up to the at least one circulator through the backflow channel. This can allow a particularly space-saving construction of the described apparatus.

In a further preferred embodiment of the apparatus at least two circulators are provided, wherein at least one of the guiding elements is arranged between the circulators.

With two circulators the flow of the cooling gas can be more uniformly than with only one circulator. The guiding elements are preferably arranged such that the cooling gas can be introduced into the impingement section only via the at least two circulators. Thus, at least one of the guiding elements is preferably arranged between the at least two circulators. This way, the cooling gas cannot enter the impingement section via a space in between the at least two circulators. It is possible that a small space is left between the circulators and the guiding elements. This may facilitate the construction. The guiding elements and the at least two circulators are preferably arranged in such a way that no cooling gas or only a small amount of the cooling gas can flow into the impingement section without flowing through one of the circulators.

In a further preferred embodiment of the apparatus the impingement section has a rectangular cross section in a plane perpendicular to a conveying direction of the conveyor.

The conveying direction is the direction into which the products can be conveyed by the conveyor. As seen in this direction, the impingement section has a rectangular cross section. That means in particular that a cross section through which the flow of the cooling gas is guided from the at least one circulator to the first side of the conveyor is constant. Thus, a particularly uniform flow of the cooling gas can be generated. In particular in this embodiment the at least one circulator is preferably arranged at that side of the impingement section that is opposite to the first side of the conveyor.

In a further preferred embodiment of the apparatus the at least one backflow channel is formed between at least one respective guiding element and a boundary of the cooling chamber.

The backflow channel is formed between the impingement section, which is confined by guiding elements, and the boundaries of the cooling chamber. This can allow a particularly space-saving construction of the described apparatus.

In a further preferred embodiment of the apparatus a flow path of the cooling gas between the at least one circulator and the first side of the conveyor is free of obstacles.

If there are no obstacles between the at least one circulator and the first side of the conveyor, a particularly uniform flow of the cooling gas can be generated. In particular, there is no obstacle such as a perforated plate between the at least one circulator and the first side of the conveyor.

According to a further aspect of the present invention a method for cooling products is provided that comprises at least the following steps:
a) conveying the products through a cooling chamber with a conveyor,
b) with at least one circulator generating a flow of a cooling gas within the cooling chamber, wherein the flow is generated in such a way that the cooling gas impinges a first side of the conveyor at a first pressure, wherein the conveyor is designed such that the cooling gas can penetrate through the conveyor so as to have a second pressure at a second side of the conveyor opposite the first side, and wherein the second pressure is lower than the first pressure, and
c) guiding the cooling gas through at least one backflow channel from the second side of the conveyor to the at least one circulator.

The details and advantages disclosed for the apparatus according to the present invention can be applied to the method of the invention, and vice versa. In particular it is preferred that the described method is performed using the described apparatus.

In a preferred embodiment of the method the flow of the cooling gas is guided by at least one guiding element.

In a further preferred embodiment of the method the at least one backflow channel is confined at least by at least one respective guiding element and a boundary of the cooling chamber.

In a further preferred embodiment of the method the cooling gas impinges the first side of the conveyor concurrently to a flow of the cooling gas through the at least one backflow channel.

It should be noted that the individual features specified in the claims may be combined with one another in any desired technological reasonable manner and form further embodiments of the invention. The specification, in particular in connection with the figure, explains the invention further and specifies particularly preferred embodiments of the invention. Particularly preferred variants of the invention and also the technical field will now be explained in more detail on the basis of the enclosed figure. It should be noted that the exemplary embodiment shown in the figure is not intended to restrict the invention. The figure is schematic and may not be to scale. The figure displays:

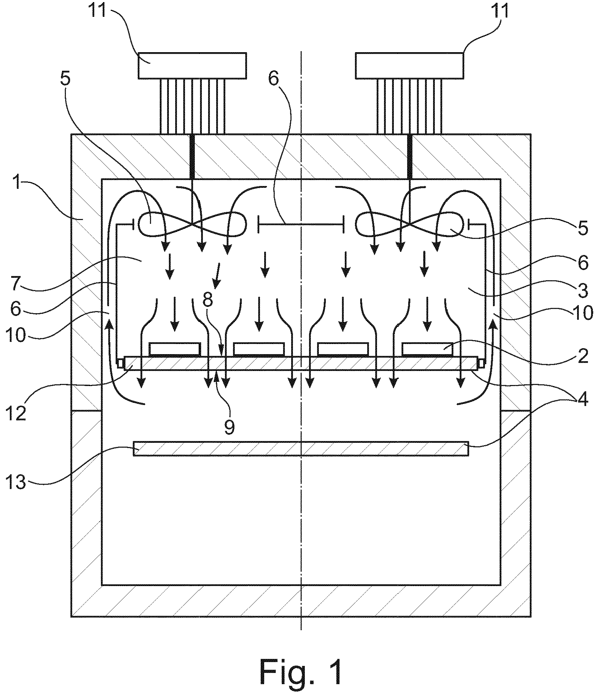

Fig. 1: a cross sectional view of an apparatus for cooling products.

Fig. 1 shows an apparatus 1 for cooling products 2. The apparatus 1 comprises a cooling chamber 3 with a conveyor 4 for conveying the products 2 through the cooling chamber 3. The conveyor has a first run 12 and a second run 13. The products 2 can be received at a first side 8 of the conveyor. The conveyor 4 comprises a plurality of perforation openings and is designed such that a pressure gradient between the first side 8 of the conveyor 4 and a second side 9 of the conveyor 4 is generated when the first side 8 of the conveyor 4 is impinged with a cooling gas. The conveyor 4 is designed such that the cooling gas can penetrate through the conveyor 4 so as to have a second pressure at the second side 9 of the conveyor 4. The second pressure is lower than the first pressure. In this example, the first side 8 of the conveyor 4 is an upper side and the second side 9 of the conveyor 4 is a lower side. Also, the apparatus 1 comprises circulators 5 for circulating the cooling gas within the cooling chamber 3. Each circulator 5 has a motor 11. Further, guiding elements 6 are provided for guiding a flow of the cooling gas. The guiding elements 6 are arranged within the cooling chamber 3 such that an impingement section 7 is formed adjacent to the first side 8 of the conveyor 4, in which the cooling gas can impinge the first side 8 of the conveyor 4 having a first pressure. The impingement section 7 has a rectangular cross section in a plane perpendicular to a conveying direction of the conveyor 4. The conveying direction of the conveyor 4 is perpendicular to the drawing plane in Fig. 1.

The guiding elements 6 are arranged to form two backflow channels 10 from the second side 9 of the conveyor 4 to the circulators 5. The cooling gas can be directed into the impingement section 7 via the circulators 5. The guiding elements 6 are arranged such that the cooling gas can flow concurrently through the impingement section 7 and the two backflow channels 10. The backflow channels 10 are confined by guiding elements 6 and a boundary of the cooling chamber 3. One guiding element 6 is shown that is arranged between the circulators 5. A flow path of the cooling gas between the at least one circulator 5 and the first side 8 of the conveyor 4 is free of obstacles.

In the cross section view of Fig. 1 two circulators 5 can be seen. Further circulators 5 can be provided at other positions e. g. in the conveying direction. Respective further guiding elements 6 may also be provided.

With the apparatus 1 products 2 such as food products can be cooled using a cooling gas such a gas comprising nitrogen. With guiding elements 6 a flow of the cooling gas can be guided. Thereby, the products 2 can be cooled particularly energy efficiently. Preferably, the apparatus 1 is used for freezing products 2.

### List of reference numerals

- 1: apparatus
- 2: product
- 3: cooling chamber
- 4: conveyor
- 5: circulator
- 6: guiding element
- 7: impingement section
- 8: first side
- 9: second side
- 10: backflow channel
- 11: motor
- 12: first run
- 13: second run

## Claims

1. Apparatus (1) for cooling products (2) comprising at least:
- a cooling chamber (3) with a conveyor (4) for conveying the products (2) through the cooling chamber (3),
- at least one circulator (5) for circulating a cooling gas within at least a part of the cooling chamber (3),
- guiding elements (6) for guiding a flow of the cooling gas,
wherein the guiding elements (6) are arranged within the cooling chamber (3) such that an impingement section (7) is formed adjacent to a first side (8) of the conveyor (4), in which the cooling gas can impinge the first side (8) of the conveyor (4) having a first pressure, wherein the conveyor (4) is designed such that the cooling gas can penetrate through the conveyor (4) so as to have a second pressure at a second side (9) of the conveyor (4) opposite the first side (8), wherein the second pressure is lower than the first pressure, and wherein the guiding elements (6) are arranged such as to form at least one backflow channel (10) from the second side (9) of the conveyor (4) to the at least one circulator (5), and wherein the cooling gas can be directed into the impingement section (7) via the at least one circulator (5).

2. Apparatus (1) according to claim 1, wherein the conveyor (4) comprises a plurality of perforation openings.

3. Apparatus (1) according to any of the preceding claims, wherein the conveyor (4) is designed such that a pressure gradient between the first side (8) of the conveyor (4) and the second side (9) of the conveyor (4) is generated when the first side (8) of the conveyor (4) is impinged with the cooling gas.

4. Apparatus (1) according to any of the preceding claims, wherein the first pressure is between 10 Pa and 300 Pa larger than the second pressure.

5. Apparatus (1) according to any of the preceding claims, wherein the apparatus (1) is designed such that the products (2) can be received at the first side (8) of the conveyor (4).

6. Apparatus (1) according to any of the preceding claims, wherein the guiding elements (6) are arranged such that the cooling gas can flow concurrently through the impingement section (7) and the at least one backflow channel (10).

7. Apparatus (1) according to any of the preceding claims, wherein at least two circulators (5) are provided and wherein at least one of the guiding elements (6) is arranged between the circulators (5).

8. Apparatus (1) according to any of the preceding claims, wherein the impingement section (7) has a rectangular cross section in a plane perpendicular to a conveying direction of the conveyor (4).

9. Apparatus (1) according to any of the preceding claims, wherein the at least one backflow channel (10) is confined at least by at least one respective guiding element (6) and a boundary of the cooling chamber (3).

10. Apparatus (1) according to any of the preceding claims, wherein a flow path of the cooling gas between the at least one circulator (5) and the first side (8) of the conveyor (4) is free of obstacles.

11. Method for cooling products (2) comprising at least the following steps:
a) conveying the products (2) through a cooling chamber (3) with a conveyor (4),
b) with at least one circulator (5) generating a flow of a cooling gas within the cooling chamber (3), wherein the flow is generated in such a way that the cooling gas impinges a first side (8) of the conveyor (4) at a first pressure, wherein the conveyor (4) is designed such that the cooling gas can penetrate through the conveyor (4) so as to have a second pressure at a second side (9) of the conveyor (4) opposite the first side (8), and wherein the second pressure is lower than the first pressure, and
c) guiding the cooling gas through at least one backflow channel (10) from the second side (9) of the conveyor (4) to the at least one circulator (5).

12. Method according to claim 11, wherein the flow of the cooling gas is guided by at least one guiding element (6).

13. Method according to claim 12, wherein the at least one backflow channel (10) is formed between at least one respective guiding element (6) and a boundary of the cooling chamber (3).

14. Method according to any of the claims 11 to 13, wherein the cooling gas impinges the first side (8) of the conveyor (4) concurrently to a flow of the cooling gas through the at least one backflow channel (10).
